# EUROPEAN PATENT APPLICATION

(11) **EP 1 148 462 A1**
(43) Date of publication of application: **24.10.2001**
(21) Application number: 99952652.8
(22) Date of filing: 15.10.1999
(51) Int. Cl.: G09B 29/04, G09F 3/02

(54) **FOLDABLE SHEET WITH OPENING/FOLDING DEVICE AND PRODUCTION PROCESS**

(30) Priority: 16.10.1998 ES 9802220
(71) Applicant: Promotec Publicidad, SL, 08026 Barcelona (ES)
(72) Inventor: MESTRES ARMENGOL, Fernando, E-08026 Barcelona (ES); LOPEZ FERNANDEZ, Francisco, E-08026 Barcelona (ES)
(74) Representative: Manresa Val, Manuel
(86) International application number: ES9900331
(87) International publication number: WO0023968

(57) **Abstract**

The sheet incorporates several crossed folds forming various portions, so that it may adopt either a folded or unfolded configuration; in the folded configuration, two of the said portions (6) immediately to a first side, which is, in general, smaller, function as articulated covers, linked by a spine (40), which contains the rest of the said sheet in the form of a small book, including the means of assisting in opening/folding the sheet that consist of gripping elements formed by prolongations (8, 9) of two (6, 10) of the said portions, that prolongations of which protrude respectively in opposite directions of sides, which are, in general, larger than the sheet in the unfolded configuration, while in the folded configuration in the form of a small book, the prolongations (8, 9) are mutually superimposed, with indications (12) inside on how to open it.

## Description

### Field of the technique

This invention concerns a folding sheet with an opening/folding device for manual operation by gripping and pulling on two mutually superimposed parts that protrude from the sheet when this is in the folded configuration. This invention also concerns a procedure for the production of the said folding sheet.

The sheet in question is of the type that may adopt either a folded configuration or an unfolded configuration, conserving its folds, which is organised in accordance to a first group of folds in the form of an accordion, parallel to a first edge of the sheet and a fold perpendicular to the previous ones, which are made when the sheet is completely folded by the first group of folds, parallel to a second edge of the sheet, perpendicular to the first, with the folded sheet being contained within articulated covers, linked by a spine, in the fashion of a small book or wrapper, where the covers are formed by portions of the said sheet adjacent to the said first edge and functioning as covers. This sheet is applicable to drawings and publicity or information leaflets etc.

In addition, as description is also given of a procedure for the production of the said folded sheet.

### State of the technique

Patent EP-A-0288472 may be mentioned as background, which makes reference to a folded sheet with the insertion of two rigid parts, which function as covers located on diagonally opposite segments of the sheet. This configuration facilitates the opening, but a certain amount of learning is required in order to adequately handle the same and the article's conception requires the preferential employment of thin paper to confection the sheet in order to facilitate its handling. Moreover, since the said rigid parts are not linked together on any side, the folded sheet is unprotected along all four sides, and may also suffer folding when attempting to open it in an unsuitable manner or when keeping it in a wallet or pocket. The cited assembly also presents difficulties when attempting to insert the folded sheet inside an envelope since none of the sides has the form of a spine. Another inconvenience of the cited configuration of the folded sheet is the lack of a preferential orientation, so that, most of the times when the sheet is unfolded, the text is not in the horizontal position so that it may be comfortably read and forces clumsy turning of up to 180 degrees in order to obtain the correct position. Finally, it should be emphasised that the fixing of the cited rigid parts to two different portions of the folded sheet forces the employment of specialised machinery and in addition, the cited covers have to be printed separately, which, taken all together, involves considerable costs and an extended unit production time.

The cited patent EP-A-0288472 has been complemented by several variants in order to improve its portability and protection when the sheet is in the folded configuration, with mention of patents WO-A-92/10828 and WO-A-92/16927, although both at the price of increasing still further the costs of the assembly due to the process required for its production and the materials that have to be employed.

With the invention that is presented in this memorandum, the inconveniences presented by the mentioned background patents are resolved by providing a new system of folding, which is easy to use, and which incorporates the means of assisting the opening/folding of the said sheet, and which practically does not require any instructions for its handling, with simple references located in certain positions on the said sheet that are visible in the folded configuration.

### Description of the invention

With the invention that is presented in this memorandum, an configuration is provide, thanks to which it is possible to unfold, in a fast, comfortable manner, a drawing or leaflet made up of a folded sheet. An important characteristic that should be emphasised, and which provides it with great commercial viability, consists of that fact that the invention may ver produced with extremely low costs, which in general, is thanks to not requiring the incorporation of hard covers or other rigid additions (appendices or tabs) into the folded structure, so that all that is required is the double-sided printing of a sheet, the perforation of this sheet and a final folding operation, where these operations may be performed almost entirely automatically employing a conventional folding machine, for which the manufacturing method is claimed at the end.

The folded sheet with its opening/folding device that is proposed in this invention may adopt either a folded configuration or an unfolded configuration, consisting of a first group of folds in accordion, parallel to the edge of a first edge with, in general, corresponds to sides the are smaller than the sheet and a fold which crosses the previous ones and which is parallel to sides, which are in general, larger than the folded sheet, where the crossing of the cited folds determine many approximately rectangular portions, and where the sheet, when it is in the folded configuration, is divided into a succession of bands that are parallel to the mentioned smaller side, with two portions to each, or which is the same thing, in two bands parallel to the sides with a succession of portions to each, so that in the folded configuration, the two upper portions immediately above the said smaller first side (which is the upper side of the sheet) act as articulated covers linked by a spine in the form of a small book or wrapper, which is able to hold the rest of the cited sheet in the folded configuration, and which is characterised because it is provided with the means to assist in the opening/folding of the sheet consisting of elements for gripping in the form of two prolongations that protrude respectively in opposite directions, the two larger sides of the sheet, while in the folded configuration of the said sheet, the said protruding prolongations are mutually superimposed.

In an example of preferred production for this invention, the sheet possesses an odd number of bands parallel to the cited first shorter side with two portions to each, where one of the said prolongations is arranged protruding from one the said portions and functions as a cover whereas the other of the said prolongations protrudes from a distal portion of the cited first smaller side, in other words, located on the directly opposite end.

In another example of preferred production of this invention, the two prolongations respectively protrude from the two portions that function as covers, so that the rest of the sheet unfolds due to gravity when the said covers are opened. In a variant of this production example, the said portions that function as covers, with their respective prolongations, are formed from a relatively thick first piece, whereas the rest of the sheet is formed from a second, thinner piece. In order to facilitate the said opening due to gravity, the folded lines are scored and include small perforations aligned along the longest of the same.

In accordance with the other characteristic of the invention, the prolongations of the cited portions form tabs or flaps that may be gripped, and where the tabs have weakened or scored lines at the joint which confers them with the tendency to fold, displaying their inner face, together with an ease of flexion or articulation when they are gripped with the intention of opening the sheet from the folded configuration, and where the inside face of the tabs incorporates arrow and/or symbols showing the correct method of gripping and traction for easy opening of the sheet.

It is evident that the cited gripping elements may be obtained by means of rigid tabs fixed to the free edges of those portions instead of a prolongation of two laminar portions of the sheet, although, in this case, it involves an increase in the manufacturing costs, without any special improvement in the products conditions, or taking advantage of the performance and economy in the procedure.

In accordance with another characteristic of the invention, at least the outer face, seen from the folded configuration, of the cited portions that function as covers, is a support for the printing of text or drawings in the length-wise direction, from left to right, where the said printing also serves as a reference for the correct orientation for gripping and pulling the prolongations, when it is in the correct position for reading, in order to open the portions that function as covers, and causing the opening of the sheet.

In accordance with another characteristic of the preferred production example of the invention, cited in first place, the said sheet is able to undergo an additional fold when it is in the folded configuration, with the end with the superimposed tabs facing forwards and the rest backwards maintaining the tabs protruding from the rest of the body of the sheet for gripping and unfolding; therefore, when the sheet is completely unfolded, it is divided into parallel, horizontal bands of four portions each. This new structure, totally based on that described previously, is more compact and permits double the surface area with the same size of covers in the form of a book, and which however, has only slightly greater production costs with respect to the previous case, since it is only necessary to add a further fold in the folding process.

In accordance with another characteristic of the invention, the said sheet is able to undergo two additional folds, made when it is only folded by the said first group of folds in accordion, by means of which each of the parallel bands parallel to the lager sides, is folded in two, superimposing the prolongations at one end of the folded assembly, so that, when the sheet is completely unfolded, it is divided into parallel, horizontal bands of four portions each.

### A brief description of the drawings

The attached drawings illustrate, in the form of non-limiting examples, several practical methods of producing the folding sheet with an opening/folding device and a method of manufacturing the same, which are representative of the essential basis of the invention. It is necessary to take into account that the particular dimensions and forms of the various elements in the described production examples may be noticeably varied, while still maintaining the same basic functionality, without this involving any essential change to the object of the invention.

Figures 1 to 4 are perspective views of a folding sheet in accordance with a first production example of this invention, with figures 2 and 4 illustrating a sequence of the various situations through which it passes during the folding of the same.

Figures 5 to 7 are perspective views of a folding sheet in accordance with the said first production example of this invention, illustrating an additional fold suitable for obtaining a more compact folded configuration of the sheet.

Figures 8 and 9 are perspective views of a folding sheet in accordance with the said first production example of this invention, illustrating the two additional folds suitable for obtaining a more compact folded configuration of the sheet.

Figures 10 and 11 are plan views, of the rear face, of the perforation profiles of folding sheets in accordance with the said first production example of this invention, which illustrate the method of this invention for the production of the said folded sheet, including respectively variants of auxiliary, throw-away elements of the automatic folding process.

Figure 12 is a plan view of a folding sheet in accordance with a second production example for this invention, in the folded configuration.

Figure 13 is a perspective view of a folding sheet in accordance with a variant of the said second production example for this invention, in the folded configuration.

Figures 14 to 17 are perspective views of a folding sheet in accordance with the said second production example for this invention, illustrating various aspects of the same, together with the steps to follow in order to unfold it.

Figure 18 is a profile view illustrating details of another variant of the said second example of producing this invention.

### Detailed description of the preferred examples for production

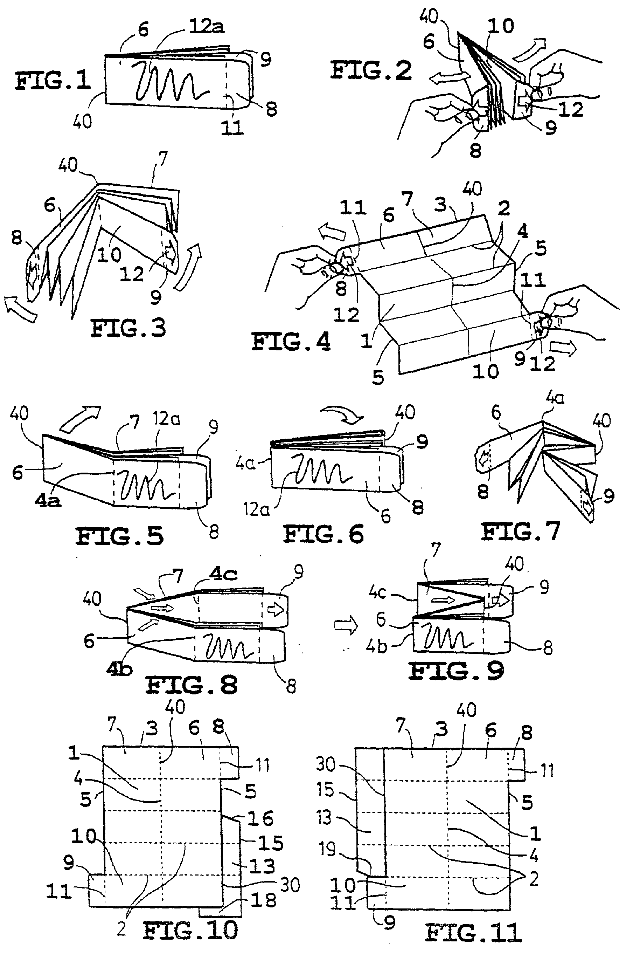

First referring to Figures 1 to 4, these illustrate the unfolding of a sheet in accordance with the said first production example from a first phase where the said sheet 1 is completely folded (Fig. 1), to a final phase where the same is completely unfolded (Fig. 4) Figure 2 shows the correct form of gripping the prolongations 8, 9 of the covers in order to achieve a simple automatic unfolding and Figure 3 shows an intermediate phase. However, it is Figure 4 that completely shows all the parts that make up folding the sheet 1 in accordance with the said first production example.

For greater simplification of the following description, the terms up and down, left and right, vertical and horizontal shall be employed to designate the positions of the various elements in accordance with how they are represented in the figures.

Therefore, in the said Figure 4, folding the sheet 1 consists of a first side 3 (upper horizontal) which forms part of the shorter and longer sides 5 (upper sides). The sheet 1 also consists of a first group of horizontal folds 2, that are parallel to the said first side 3 and a vertical fold 4, which is parallel to the said longer sides 5. The said folds 2, 4, which cross each other, delimit a number of approximately rectangular portions, which divide the sheet into a succession of bands parallel to the said first shorter side 3, with two portions to each, or, which is the same, seen in a different manner, two bands parallel to the longer sides 5 with a succession of portions to each. In the folded configuration (Fig. 1), two portions 6, 7, immediately next to the said first side 3 (the two portions of the upper band) act as hinged covers, linked by a spine, which are able to contain the rest of the said sheet in the folded configuration, in the form of a small book or wrapper. It is evident that the shorter sides do not have to be the upper and lower sides and the longer sides the lateral vertical sides, although this arrangement is the most advantageous. It is also possible to arrange the sheet in the manner described in the previous production example, but with the graphic information inside rotated through 90°, in which case the user should perform an equivalent rotation of the sheet in the folded configuration in order to have easy access to the said information.

The cited fold 4, parallel to the longer sides 5, includes a portion of fold 40, which divides the said portions 6, 7 that act as covers. This portion of fold 40 functions as the said spine, which preferably consists of two parallel scored lines, which are close together and facilitate the housing of the rest of sheet 1 in the folded configuration.

In this production example of this invention, the sheet 1 consists of an odd number of the said bands parallel to the cited first shorter side 3, with two portions each, since it is fitted with the means of assisting the opening/folding of sheet 1, which consist of gripping elements formed by a prolongation 8 of one the portions 6 that function as covers and a prolongation 9 of one of the portions 10 of the band parallel to the first side 3 distal to the same (lower band). The said prolongations 8, 9 protrude in opposite direction respectively, of the said longer sides 5 of the sheet 1 in the unfolded configuration (Fig. 4), while in the folded configuration of the said sheet 1 in the form of a small book, the said prolongations 8,9 are mutually superimposed (Fig. 1).

The prolongations 8, 9 present weakened 11 or scored lines at their origin which provides them with the tendency to fold, revealing the internal face (Fig. 2), together with capability of flexion or hinging when gripped with the intention of opening the sheet 1 from the folded configuration, and where the internal face of the prolongations 8, 9 incorporate indicating arrows 12 and/or symbols showing the correct form of gripping and pulling in order to easily open the sheet. When the said prolongations 8, 9 are pulled, the portions 6, 7 acting as covers open and the same movement of the hands will accompany the unfolding of the sheet. In order to return the sheet 1 to the folded configuration, it is sufficient to accompany the portions 6, 7, gripped by the fingers to the mutually opposite position of Figure 1.

At least one exterior face of the cited portions 6, 7 acting as covers, and seen when the sheet 1 is in the folded configuration, constitute a support for the printing of text 12a or drawings in a longitudinal direction from left to right. The said support for printed information 12a has great economic importance, for example, for publicity, however, the said printing 12a, when it is in a suitable position for being correctly read, also serves as a reference for the correct orientation for gripping and pulling the prolongations 8, 9 in order to open portions 6,7 acting as covers, producing the opening of the sheet 1. This means that presumably the first thing that a user is going to do, when holding the said sheet in the folded configuration, is to read the graphic information 12a printed on the its portions 6, 7 acting as covers, which requires that the said sheet 1 be rotated in the folded configuration until the said information 12a is in the correct position for reading, and where this position coincides with the correct position for the sheet to be correctly unfolded by pulling on the prolongations 8, 9 and the portions 6, 7 acting as covers. Therefore, only with the cited arrows 12 and with the aid of the printed information 12a, a user has sufficient indications on the use of the folding sheet 1 of this invention.

Referring now to Figures 5 to 7, in order to obtain an even more compact folded configuration, the sheet 1 includes an additional fold 4a, when the said sheet 1 is in the folded configuration. This means that the said fold 4a folds the said folded configuration in two, with portion 7 inside and portion 6 outside or vice-versa, and with the prolongations 8, 9 mutually superimposed and protruding from one end of the assembly for gripping and pulling. In this way, when the sheet 1 is in the unfolded configuration, it is divided by the folds 2, 4 and 4a in a succession of bands parallel to the said shorter side 3, with four portions each, or, which is the same thing, with four bands parallel to the said longer sides 5, with a succession of portions each. However, this is the less preferred of the configurations because the portions 6, 7 which act as covers are not linked by a spine in the compact folded configuration.

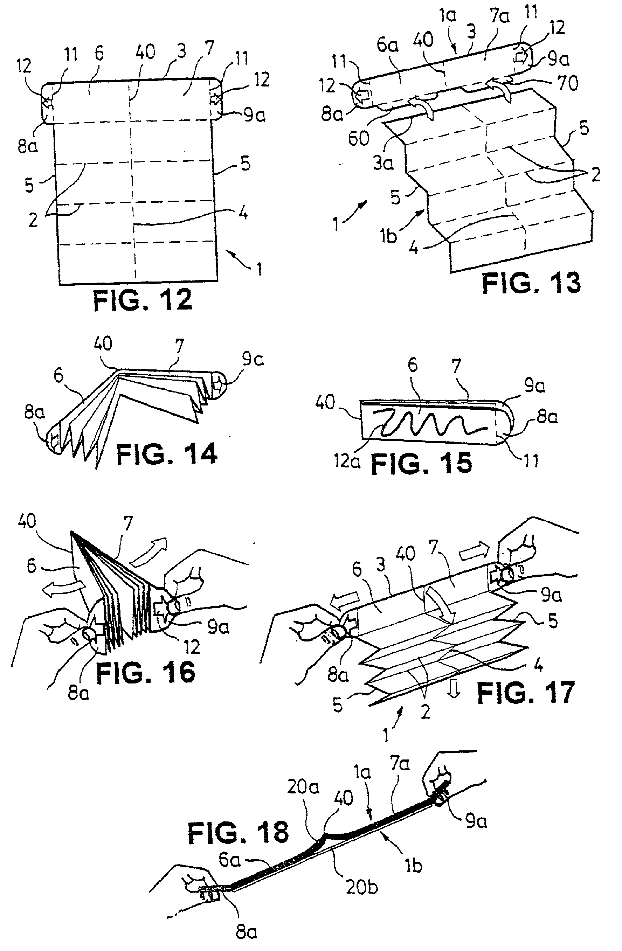

Figures 10 and 11 show two variants with scored profiles that are suitable for manufacturing the folding sheet, showing the scored lines and a guide strip 13 for the folding, which may be later detached in accordance with the procedure for this invention.

The procedure proposed for the production of the folding sheet first consists of the scoring of the sheet 1 from a sheet previously printed on both sides in order to obtain a scored profile as illustrated in Figure 10 or in Figure 11, defining a quadrangular surface with sides that are, in general, shorter, that consist of a first side 3, and sides 5, which are, in general, longer, and weakened lines, including scoring and/or perforations, corresponding to the various lines of folding 2, 4, 11 of the sheet 1, and where applicable, to the fold lines 4a, 4b, 4c or others. The quadrangular surface also consists of prolongations 8, 9, which protrude by equal distances, in opposite directions, from the said sides of the said rectangle, which are, in general, longer.

In the said first production example, illustrated in Figures 10 and 11, one of the said prolongations 8 protrudes from one of the portions 6 acting as covers while the other prolongation protrudes from a portion 10, which is distal from the said first side 3 and is located in a band vertically opposite that or the portion 6 as has already been explained in relation to Figures 1 to 4. However, in an alternative production example, which shall be described later, the cited prolongations are arranged in another manner, which does not cause any obstacle to the application of the method of this invention.

The new feature of the said method lies mainly in the inclusion into the said scored profile of a strip 13 adjacent to at least one of the said sides 5, which are, in general, longer, which extends along at least most of the same, and over which the strip 13 prolongs the lines of fold 2. One edge the said strip 13 defines an edge 15, which is suitable as a reference in order to position the sheet 1 against the side or ruler of a conventional folding machine, so that the said sheet, during the mechanical folding process, presents at least two orthogonal edges that are free from protuberances and which may be employed as positioning references. The cited strip 13 should be eliminated once the sheet 1 has been folded; to accomplish this, it is provided with a weakened line 30 between the cited strip 13 and the corresponding side 5 of the sheet 1 in order to facilitate separation of the strip by pulling and tearing it off. For this reason, the said weakened line 30 consists of a large number of perforations separated by fixing points with a length of some 0.2 to 0.6 mm in function of the sheet material and the number of fixing points in order to maximally facilitate the said separation operation and to provide a correct finish to the sheet 1.

In the variant of Figure 10, the said strip 13 has the same width as that of the corresponding prolongation 8, 8a and extends over part of the edge of the quadrangular surface, with a portion 18 covering one of its corners. In this case, the edge 15 is aligned with an edge of the end of prolongation 8, so that the length of the said strip 13 may be less than the length of the corresponding longer side 5 that is not occupied by the prolongation 8. However, in the folded configuration, the folded portions of the strip 13 are superimposed and coincide in length with the prolongations 8, 9, making it difficult to differentiate them when gripping and pulling the strip 13 to eliminate it. For this reason, the said portion 18 of the corner protrudes from one side of the assembly to facilitate gripping and pulling in order to accomplish the said operation of eliminating the strip 13 without any interference from the prolongations 8, 9.

Additionally, the strip 13 presents an end 16 facing the corresponding prolongation 8, where the end 16 has an oblique orientation to allow movement over the rollers of the said folding machine to prevent the hooking of the vertices with possible projections on the machine during the guiding process.

In the variant of Figure 11, the said strip 13 is wider than the corresponding prolongation 8 and extends along the length of the zone of the said side 5 that is not occupied by the corresponding prolongation 8, with the existence of at least one perforation between the strip 13 and the corresponding prolongation 8 and at least one fixing point 19 on the end furthest away from the side 5. Therefore, in the folded configuration, some folded portions of the strip 13 are superimposed over the prolongations 8, 9, but protruding from the same, which facilitates gripping and pulling when performing the cited operation to eliminate the strip 13, without interference with the prolongations 8, 9.

After the perforation operation, by which the perforated profile of Figure 10 or Figure 11 is obtained, folding of the sheet 1 is accomplished using the said conventional folding machine, along the lines of folds 2, 4 that are necessary to form the various portions and to provide the sheet 1 with a roughly folded configuration. Finally, the said folded strip 13 is eliminated by means of the said pulling and tearing of the cited weakened line 30, just as was described above, in order to provide the sheet 1 with its final folded configuration. The said elimination may be carried out manually or by employing a simple machine that has been adapted to do this.

With reference to Figure 12, this shows a sheet 1 in accordance with a second production example of this invention, where the said sheet 1 has almost all the same characteristics as the sheet 1 in the first production example that was described in relation to Figures 1 to 4. Therefore, as in the first production example, the folding sheet 1 of Figure 12 consists of a first side 3 (upper horizontal) that forms part of the shorter and longer sides 5 (side vertical). The sheet 1 also consists of a first group of horizontal folds 2, parallel to the said first side 3 and a vertical fold 4, parallel to the said longer sides 5. The cited folds 2, 4 cross each other and delimit a large number of approximately rectangular portions that divide the sheet into a succession of bands parallel to the cited first shorter side 3, with two portions each, or which is the same thing seen in a different manner, the two bands parallel to the longer sides 5 with a succession of portions in each one. Additionally, two portions 6, 7 immediately next to the said first side 3 (the two portions of the upper band) act as hinged covers, linked by a spine, and which is capable of containing the cited sheet in its folded configuration in the form of a small book or wrapper.

The difference with respect to the first production example lies in the fact that in this case, the means of assisting in opening/folding the sheet 1 consist of gripping elements formed by prolongations 8a, 9a, of the said portions 6, 7 that function as covers, where the prolongations 8a, 9a protrude respectively, in opposite directions, the said sides that are, in general, larger 5 than the sheet 1 in an unfolded configuration, whereas, in the folded configuration of this sheet 1, in the form of a small book, the prolongations 8a, 9a are mutually superimposed. Here also, the prolongations 8a, 9a present weakened or scored lines 11 at their origin which provides them with the tendency to fold, revealing the internal face, together with capability of flexion or hinging when gripped with the intention of opening the sheet 1 from the folded configuration (Fig. 16). The internal face of the prolongations (8a, 9a) incorporate arrows 12 and/or symbols that correctly indicate the method of holding and traction necessary to easily open the sheet 1. The outside faces of the portions 6, 7 acting as covers, here are also a support for graphical information 12a that in addition, is a reference for the correct position for opening the sheet 1.

In this second production example, the sheet 1 is capable of unfolding due to gravity when the said portions 6, 7, which act as covers, are opened by pulling on the prolongations 8a, 9a horizontally in opposite directions, just as shown in Figures 16 and 17. It is therefore, essential that the folds 2, 4 of the sheet 1 provide minimum resistance to unfolding, for which reason the said folds 2,4 consist of weakened lines that are scored and/or include perforations that are aligned along the length of the cited folds 2, 4. In order to refold the said sheet, it is sufficient to hold portions 6, 7 that act as covers and to use the other hand to bring the lower part of the unfolded sheet 1 towards the said portions 6, 7 acting as covers, where the sheet 1 will show a natural tendency to fold in the form of an accordion (Fig. 14), closing itself to terminate the portions 6, 7 acting as covers to form the folded configuration in the form of a small book as shown in Figure 15. It should result evident that this second production example, unlike the first, does not have any limitation as to the number of horizontal bands delimited by the said folds 2 parallel to the shorter side of the sheet 1.

Figure 13 shows a variant of the said second production example, which is characterised because the sheet 1 consist of s first piece 1a of a relatively thick material that forms the said two portions 6a, 7a acting as covers when the sheet 1 is in the folded configuration in the form of a small book, including its corresponding prolongations 8a, 9a, and a second piece 1b of a thinner material that forms the other portions. For the union of the said first and second pieces 1a and 1b, the two portions 6a, 7a acting as covers for the first piece 1a, in addition consist of tabs 60, 70 that extend along the length of the edges of the same parallel to the said first side 3, leaving a free zone on both sides of a fold portion 40, acting as a spine of the fold 4, where the said second piece 1b is fixed to the said tabs 60, 70 by an area adjacent to a first edge 3a of the same, so that in the folded configuration in the form of a small book, with the folded second piece 1b contained inside portions 6a, 7a acting as covers, the said tabs 60, 70 are folded with an accumulated elastic tension, which is freed when portions 6a, 7a acting as covers are opened, causing the unfolding of the said second piece 1b of the sheet 1, so that the said tabs 60, 70 also form part of the said means of assisting the opening/folding of the sheet 1.

Another alternative form of uniting the said first and second pieces 1a, 1b consists of fixing the second piece 1b to the portions 6a, 7a acting as covers of the said first piece 1a by means of a strip of the second piece 1b immediately next to the first side 3a of the same, except for a central area 20a of the said first piece 1a to both sides of the said portion of the fold 40, acting as the spine, with a corresponding free area of union 20b of the second piece 1b of less length than the said central area 20a of the first piece 1a (Fig. 18) and is therefore capable of being tensioned by the opening of portions 6a, 7a acting as covers, by pulling on the prolongations 8a, 9a causing the unfolding of the said second piece 1b of the sheet 1, also constituting part of the said means of assisting the opening/folding of the sheet 1.

Having sufficiently described the nature of the invention, together with the manner of putting it into practice, it is placed on the record that anything that does not change, alter or modify its fundamental principle may be subject to variations of detail. The following claims define the essence of the objective of this invention.

## Claims

1. A folding sheet with an opening/folding device, which may either adopt a folded or unfolded configuration, consisting of a first group of folds (2), in the form of an accordion, parallel to an edge of the first side (3) of the sides that are, in general, less than this sheet (1) and a fold (4) which crosses the previous ones and which is parallel to sides, which are, in general, larger (5) than the unfolded sheet (1), and where the cross of the said folds determines many approximately rectangular portions and when the sheet (1) is unfolded, it is divided into a succession of bands parallel to the said first lesser side (3), with two portions each, or two bands that are parallel to sides (5) with a succession of portions to each one, so that when folded, two portions (6, 7) of the said first side (3) function as jointed covers linked by a spine, which are capable of containing the rest of the said sheet when folded, in the form of a small book or wrapper, **characterised** because it consists of an odd number of the said bands parallel to the said first side (3), which are, in general, less, with two portions each, and because the means of assisting in opening/folding the sheet (1) have been provided and which consist of gripping elements formed by a prolongation (8) of one of the portions (6) that functions as a cover and a prolongation (9) of another portion (10) distal to the first side (3), where the prolongations over hang respectively, in opposite directions, the said sides that are, in general, larger (5) than the sheet (1) in an unfolded configuration, in the folded configuration of this sheet (1), in the form of a small book, the prolongations (8, 9) are mutually superimposed.

2. A folding sheet with an opening/folding device, which may either adopt a folded or unfolded configuration, consisting of a first group of folds (2), in the form of an accordion, parallel to an edge of the first side (3) of the sides that are, in general, less than this sheet (1) and a fold (4) which crosses the previous ones and which is parallel to sides, which are, in general, larger (5) than the unfolded sheet (1), and where the cross of the said folds determines many approximately rectangular portions and when the sheet (1) is unfolded, it is divided into a succession of bands parallel to the said first lesser side (3), with two portions each, or two bands that are parallel to sides (5) with a succession of portions to each one, so that when folded, two portions (6, 7, 6a, 7a) of the said first side (3) function as jointed covers linked by a side, which are capable of containing the rest of the said sheet when folded, in the form of a small book or wrapper, **characterised** because the means of assisting in opening/folding the sheet (1) have been provided and which consist of gripping elements formed by prolongations (8a, 9a) of the portions (6, 7, 6a, 7a) that function as covers, the prolongations of which protrude from respectively, in opposite directions, the said sides that are, in general, larger (5) of the sheet in the unfolded configuration, while the folded configuration, in the form of a small book, of the said sheet (1) is able to be unfolded by gravity when the said portions are opened (6, 7, 6a,7a) functioning as a cover by pulling on the prolongations (8a, 9a).

3. A folding sheet, in accordance with claim 1 or 2, **characterised** because a portion of the fold (40) of the said fold (4) which divides the said portions (6, 7, 6a, 7a) which functions a cover, consisting of two parallel scored lines, next to each other and performing the functions of the said spine.

4. A folding sheet, in accordance with claim 2 or 3, **characterised** because it consists of weakened lines which have been scored and/or small perforated lines aligned along the length of the said folds (2, 4).

5. A folding sheet, in accordance with claim 2 or 3, **characterised** because it consists of a first piece (1a) of a relatively thick material which forms the said two portions (6a, 7a) functioning as covers for the folded configuration of the sheet (1) in the form a small book, with its corresponding prolongations (8a, 9a) and a second piece (1b) of a thinner material that forms the rest of the portions.

6. A folding sheet, in accordance with claim 5, **characterised** because the said two portions (6a, 7a) which function as covers and also consisting of flaps (60, 70) that extend along the lengths edges of the same ones parallel to the said first side (3), leaving an area free at both sides of the said portion of the fold (40) functioning as a spine, where the said second piece (1b) which is fixed to the said flaps (60, 70) by a first edge (3a) of the same, so that when the sheet (1) is in the folded configuration as a small book, with the folded second piece (1b) contained within the portions (6a, 7a) that function as covers, the said flaps (60, 70) are folded with an accumulated elastic tension, which is freed when the portions (6a, 7a), which function as covers, are opened causing the unfolding of the said second piece (1b) of the sheet (1), so that the said flaps (60, 70) form part of the said means of assisting the opening/folding of the sheet (1).

7. A folding sheet, in accordance with claim 5, **characterised** because the said second piece (1b) is joined to the portions (6a, 7a) which function as covers of the said first piece (1a), by a strip immediately next to the said first side (3a) of the same, except for a central zone (20a) of the said first piece (1a) on both sides of the said folded portion (40) functioning as a spine, with a corresponding zone that is joint-free (20b) of the second piece (1b), shorter than the said central zone (20a) of the said first piece (1a) and because of this it is capable of being tensed when the portions functioning as covers (6a, 7a) are opened by pulling on the prolongations (8a, 9a), and causing the unfolding of the second piece (1b) of the sheet (1) and forming part of the said means of assisting the opening/folding of the sheet (1).

8. A folding sheet, in accordance with any of the previous claims, **characterised** because the prolongations (8, 9, 8a, 9a) of the said portions (6, 7, 10) form flaps or tabs that may be held, the flaps of which present, next to their origin, scored or weakened lines which confers them with the tendency to fold, revealing the interior face, together with an ease of flexion or bending at the moment of holding them with the intention of opening the sheet (1) from the folded configuration, and where the internal face of the prolongations (8, 9, 8a, 9a) incorporate arrows (12) and/or symbols that correctly indicate the method of holding and traction necessary to easily open the sheet.

9. A folding sheet, in accordance with any of the previous claims, **characterise**d because at least one exterior face, seen when the sheet (1) is in the folded configuration, of the said portions (6, 7, 6a, 7a), which function as covers, constitute a support for the printing of text (12a) or images in the length-wise direction, from left to right, where the said printing (12a), when it is in a suitable position to be read, serves as a suitable orientation for gripping and pulling the prolongations (8, 9, 8a, 9a) for opening the portions (6, 7, 6a, 7a) that function as covers and unfolding the sheet (1).

10. A folding sheet, in accordance with any of the previous claims 1, 3, 8 or 9, **characterised** because it includes an additional fold (4a), formed when the said sheet (1) is in the folded configuration, which divides it in two, with portion (7) inside and portion (6) outside or vice-versa, and with the prolongations (8, 9)mutually superimposed, with one end protruding for gripping and unfolding, so that when the sheet (1) is in the unfolded configuration, it is divided by folds (2, 4, 4a) in a succession of bands parallel to the said side, which in general are smaller (3), with four portions each, or four bands parallel to the said sides, which in general are larger (5), with a succession of portions in each.

11. A folding sheet, in accordance with any of the previous claims 1, 3, 8 or 9, **characterised** because it includes two additional folds (4b and 4c), formed when the said sheet (1) is only folded for the said first group of folds (2) in accordion, by means of which each of the bands parallel to the sides, which are, in general, larger (5) are folded in two and with the said prolongations (8, 9) protruding mutually superimposed at one end, so that, when the sheet (1) is in the unfolded configuration, it is divided by the folds (2, 4, 4b, 4c) in a succession of bands parallel to the said side, which is, in general, smaller (3), with four portions each or four bands parallel to the said sides, which are, in general, larger (5), with a succession of portion each.

12. The procedure for the production of a folding sheet with opening/folding device, is **characterise**d because it consists of:
a sheet (1) cut from a previously printed, unfolded larger sheet, which defines a quadrangular surface with sides that are, in general, smaller, that consists of a first side (3) and sides that are, in general, larger (5) and weakened lines, which include scored lines and/or perforations, corresponding to the various folded lines (2, 4,11) of the sheet (1), the quadrangular surface of which also consists of:
prolongations (8, 9, 8a, 9a), which protrude at equal distances, but opposite directions, the said sides that are, in general, larger (5) of the said rectangle;
a strip (13) adjacent to at least one of the said sides, which are, in general, larger (5), which extend along the length of at least the larger part of the same and having a width equal to or greater than that of the prolongation (8, 8a) corresponding to the same side (5), and over which strip (13) the folded lines (2) are prolonged, defining an edge to the said strip (13), an edge (15) which is suitable as a reference for positioning the sheet (1) against the side or rule of a conventional folding machine, and which has a weakened line (30) between the said strip (13) and the corresponding side (5) of the sheet (1) in order to facilitate the elimination of the strip (13) by traction and tearing of the said weakened line (30) once the sheet (1) is folded.
the sheet (1) is folded by means of the said conventional folding machine by those fold lines that are necessary to form the various portions and to position the sheet (1) in a roughly folded configuration.
Eliminate the said folded strip (13) by means of the said traction and tearing of the said weakened line (30) in order to place the sheet (1) in the final folded configuration.

13. The procedure, in accordance with claim 12, is **characterised** because the said weakened line (30) includes many aligned perforations, separated by fixing points, which are of a minimised length in function of the material in order to maximally facilitate the elimination of the strip (13) and to provide the correct finish to the sheet (1).

14. The procedure, in accordance with claim 12 or 13, is **characterised** because the said strip (13) is wider than that of the corresponding prolongation (8, 8a), and extends along the entire length of the whole zone of the said side (5) that is not occupied by the corresponding prolongation (8,8a), with at least one cut existing between the strip (13) and the corresponding prolongation (8, 8a), and at least one fixing point (19) at the furthest end from the side (5), which is, in general, larger, so that, in the folded configuration, some of the folded portions of the strip (13) are superimposed over the prolongations (8, 9, 8a, 9a), protruding from the same in order to facilitate gripping and traction when performing the said operation to eliminate the strip (13).

15. The procedure, in accordance with claim 12 or 13, is **characterised** because the said strip (13) has the same width as that of the corresponding prolongation (8, 8a) and extends over at least part of the perimeter of the quadrangular surface, with a portion (18) covering at least one of its corners, so that, in the folded configuration, the said portion (18) of the corner protrudes from one side, in order to facilitate gripping and traction when performing the said operation to eliminate the strip (13).

16. The procedure, in accordance with claim 12 or 13, is **characterised** because the said strip (13) presents an end (16) facing the corresponding prolongation (8), the end (16) of which has an oblique orientation in order to favour the movement of elements of the said folding machine, but without them causing traction on the said strip (13).
